Europäisches Patentamt

European Patent Office

Office européen des brevets

(19)

(11) Veröffentlichungsnummer : **0 267 197**
**B1**

(12) ## EUROPÄISCHE PATENTSCHRIFT

(45) Veröffentlichungstag der Patentschrift :
**07.03.90**

(21) Anmeldenummer : **86905796.8**

(22) Anmeldetag : **23.09.86**

(86) Internationale Anmeldenummer :
**PCT/EP 86/00557**

(87) Internationale Veröffentlichungsnummer :
**WO/8702124 (09.04.87 Gazette 87/08)**

(51) Int. Cl.⁵ : **F 27 B   3/04**, F 27 B  19/02,
C 22 B 21/00, C 22 B   7/00

(54) SCHMELZ- UND WARMHALTEOFEN.

(30) Priorität : **27.09.85 DE 3534484**

(43) Veröffentlichungstag der Anmeldung :
**18.05.88 Patentblatt 88/20**

(45) Bekanntmachung des Hinweises auf die Patenterteilung : **07.03.90 Patentblatt 90/10**

(84) Benannte Vertragsstaaten :
**AT BE CH DE FR GB IT LI LU NL SE**

(56) Entgegenhaltungen :
**DE--A-- 2 553 697**
**FR--A-- 2 422 724**
**FR--A-- 2 453 375**
**GB--A--   383 103**

(73) Patentinhaber : **BLEIWENZ GMBH**
**Kaiserstrasse 3**
**D-6920 Sinsheim-Weiler (DE)**

(72) Erfinder : **BLEICKERT, Gerhard**
**Kaiserstr. 3**
**D-6920 Sinsheim-Weiler (DE)**
Erfinder : **FRUH, Stefan**
**Ziegelweg 15**
**D-6924 Neckarbischofsheim (DE)**

(74) Vertreter : **Dreiss, Hosenthien & Fuhlendorf**
**Gerokstrasse 6**
**D-7000 Stuttgart 1 (DE)**

## Beschreibung

Die vorliegende Erfindung bezieht sich auf einen Schmelz- und Warmhalteofen, insbesondere für NE-Metalle nach dem Oberbegriff des Anspruchs 1.

Bei einem derartigen aus der FR-A-2 453 375 bekannten Schmelz- und Warmhalteofen sind oberhalb der Vielzahl enger Durchgänge für das flüssige Metall zwischen der Schmelzkammer und der Warmhaltekammer separate kleine Öffnungen vorgesehen, durch die die Verbrennungsgase von der Schmelzkammer in die Warmhaltekammer und durch diese hindurch zu dem in der Stirnwand angeordneten Abzug gelangen. Die maximale Schmelzbadoberfläche in der Warmhaltekammer ist unterhalb des relativ durchmessergroßen Verbrennungsgas-Abzugs angeordnet, dessen Mittelachse etwa in Höhe der horizontalen Durchgänge für das flüssige Metall und etwa in deren Verlängerung liegt.

Der bekannte Schmelz- und Warmhalteofen verwendet in der Warmhaltekammer zusätzlich einen Brenner. Außerdem bedingt die konstruktive Anordnung der zusätzlichen Öffnungen für die Rauchgase und des Rauchgasabzugs einen recht großen Gasraum oberhalb des Metallbades in der Warmhaltekammer, so daß die Warmhaltekammer recht voluminös aufgebaut ist.

Aufgabe der vorliegenden Erfindung ist es deshalb, einen Schmelz- und Warmhalteofen der eingangs genannten Art zu schaffen, der eine verbesserte Verbrennungs- bzw. Rauchgasführung durch die Warmhaltekammer derart bietet, daß eine verbesserte Ausnutzung der zugeführten Energie sowie eine vollkommene Nachverbrennung der Rauchgase gewährleistet ist, ohne daß ein zusätzlicher Brenner in der Warmhaltekammer notwendig ist.

Diese Aufgabe wird bei einem Schmelz- und Warmhalteofen der genannten Art durch die im Kennzeichen des Anspruchs 1 angegebenen Merkmale gelöst.

Durch die erfindungsgemäßen Maßnahmen wird erreicht, daß die Verbrennungsgase vom Brenner, mit dem das Schmelzgut in der Schmelzkammer geschmolzen wird, zwingend über die und längs der Oberfläche des geschmolzenen Metalls in der Warmhaltekammer geführt werden, so daß dadurch ständig eine Warmhaltung erfolgt und gleichzeitig eine Nachverbrennung der noch nicht verbrannten Bestandteile der Verbrennungsgase erfolgt. Außerdem erfolgt dabei eine Verbrennung der öligen und sonstigen Bestandteile, die bei der Verwendung bzw. dem Abschmelzen von Rücklaufschrott anfallen. Durch diese unmittelbare und zwingende Berührung von Verbrennungsgasen und flüssigem Metall ist die Energieausbeute höher und das Abgas sauberer, so daß der erfindungsgemäße Ofen auch umweltfreundlicher ist.

Da die Innenfläche des Deckels der Warmhaltekammer weit nach unten gesetzt ist, ist nur ein relativ enger Raum zwischen dieser und Oberfläche des flüssigen Metallbades vorhanden, so daß durch das kleine Volumen dieses Gasraumes innerhalb der Warmhaltekammer unnötige Wärmeenergieabgabe nach außen vermieden ist. Die Herstellung dieses Schmelz- und Warmhalteofens ist außerdem durch die Verwendung nur eines einzigen Brenners vereinfacht.

Um in jedem Falle ein Abführen der Verbrennungsgase aus der Schmelzkammer über die Schmelzoberfläche in der Warmhaltekammer zum Kamin zu ermöglichen, sind gemäß einem weiteren Ausführungsbeispiel vorliegender Erfindung in einer der Warmhaltekammer zugewandten Wand der Schmelzkammer und/oder deren Schacht Druckausgleichskanäle angeordnet. Diese Druckausgleichskanäle sorgen für einen parallelen Weg zu den Durchlässen zwischen Schmelzkammer und Warmhaltekammer und treten in Funktion, falls der freie Querschnitt Durchlässe durch zeitweise zuviel vorhandener Schmelze zu weit verringert ist.

Ein einfaches Entnehmen von Metallschmelze aus dem erfindungsgemäßen Schmelz- und Warmhalteofen wird dadurch erreicht, daß die gesamte Einheit aus Schmelzkammer mit Brenner und Warmhaltekammer mittels hydraulischer Einrichtungen kippbar ist.

Ein Ausführungsbeispiel der Erfindung wird im folgenden unter Bezugnahme auf die beigefügten Zeichnungen beschrieben. Es stellen dar :

Figur 1 einen Querschnitt durch ein Ausführungsbeispiel ;

Figur 2 einen Schnitt in Fig. 1 entlang der Linie II-II.

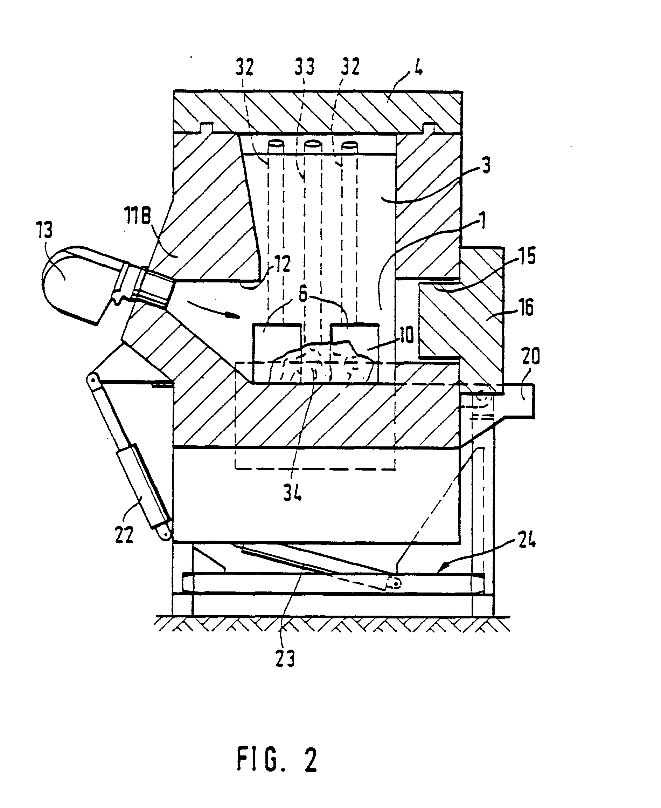

Der Schmelz- und Warmhalteofen, insbesondere für NE-Metalle, weist eine Schmelzkammer 1 und eine Warmhaltekammer 2 auf. Oberhalb der Schmelzkammer 1 befindet sich ein Einfüllschacht 3, der oben mit einem Deckel 4 verschlossen ist. Der Deckel 4 ist mittels eines hydraulisch betätigten Gestänges gem. Pfeil A zu öffnen. Bei geöffnetem Deckel 4 wird die Schmelzkammer 1 über den Einfüllschacht 3 mit Schmelzgut (z. B. Aluminium oder Aluminium-Legierungen) mittels einer (nicht gezeigten) Chargiermaschine beschickt. Zwischen Schmelzkammer 1 und Warmhaltekammer 2 befinden sich vorzugsweise zwei seitlich angeordnete, schlitzförmig (vgl. Fig. 2) ausgebildete Durchlässe 6. Über diese Durchlässe 6 steht die Schmelzkammer 1 mit der Warmhaltekammer 2 in Verbindung. Die Warmhaltekammer 2 liegt tiefer als die Schmelzkammer 1, und zwar derart, daß die Oberfläche 7 des geschmolzenen Metalls 8 tiefer liegt als der Boden 9 der Schmelzkammer 1. Die Durchlässe 6 in der Wand 11A zwischen den beiden Kammern 1 und 2 verlaufen somit schräg nach unten.

In der an die Wand 11A angrenzenden Wand 11B der Schmelzkammer 1 befindet sich ein geneigt verlaufender Schacht 12, in dessen Ende ein Brenner 13 eingesetzt ist. Er ist so eingesetzt, daß die Richtung seiner Flamme auf das Schmelzgut 10 auf dem Boden 9 der Schmelzkammer 1 gerichtet ist.

Auf der dem Brenner 13 gegenüberliegenden Seite weist die Schmelzkammer 1 eine weitere Öffnung 15 auf, die mit einer Tür 16 verschlossen ist. Sie dient zur Reinigung der Schmelzkammer und richtigen Brennflammeneinstellung.

Die Wand 11A der Schmelzkammer 1 und deren sich nach oben erstreckende Verlängerung 31, die eine Seitenwand des Einfüllschachtes 3 bildet, sind mit bspw. drei innen liegenden Kanälen 32, 33, die in einem Bereich unmittelbar unterhalb des Deckels 4 in den Innenraum des Einfüllschachtes 3 münden. Gemäß Fig. 2 verlaufen die Kanäle 32 und 33 etwa parallel zueinander nach unten weiter in der Wand 11A und münden in die Durchlässe 6 (die beiden äußeren Kanäle 32) bzw. im Bereich des zwischen den Durchlässen 6 angeordneten Steges 34 der Wand 11A unmittelbar in die Warmhaltekammer 2 (der mittlere Kanal 33).

Die Warmhaltekammer 2 ist mit einem Deckel 14 abgedeckt, der mittels eines hydraulisch betätigbaren Gestänges 17 angehoben werden kann. Im Deckel 17 befindet sich ein Kamin 18, der in ein Heißluft-Abführrohr 19 übergeht, aber auch in eine Abzugshaube münden kann. Bei einem anderen nicht dargestellten Ausführungsbeispiel ist der Deckel 17 fest und die Warmhaltekammer 2 am der Schmelzkammer 1 abgewandten Ende mit einer Reinigungstür ähnlich der Tür 16 versehen.

Die Warmhaltekammer 2 ist ferner mit einer Auslaßrinne 20 versehen, über deren Auslaßöffnung 21 das geschmolzene Metall aus der Warmhaltekammer 2 austritt, wenn die gesamte durch Schmelzkammer 1 und Warmhaltekammer 2 gebildete Einheit hydraulisch gekippt wird, und zwar mittels der hydraulisch betätigbaren Gestänge 22 und 23. Die gesamte Einheit, die in der beschriebenen Weise gekippt werden kann, ist in einem geschweißten Eisengestell 24 aufgenommen.

Wenn im Vorgehenden von « Gestänge » die Rede ist, so sind damit aus Kolben und Zylinder bestehende, hydraulisch betätigbare Einheiten gemeint. Es ist für den Fachmann im vorliegenden Zusammenhang klar, wie diese auszubilden sind. Deshalb kann auf ihre detaillierte Beschreibung im vorliegenden Zusammenhang verzichtet werden.

Bringt man nun Schmelzgut 10 in die Schmelzkammer 1, und wird durch Beheizung der Schmelzkammer 1 mittels Brenner 13 dort ein Schmelzen bewirkt, so fließt das geschmolzene Metall über die Durchlässe 6 in die tieferliegende Warmhaltekammer 2. Dies ist dadurch gewährleistet, daß die Warmhaltekammer 2 in der dargestellten Weise tiefer liegt als die Schmelzkammer 1, wobei u. U. der Boden 9 der Schmelzkammer 1 zu den Durchlässen 6 hin leicht geneigt sein kann, so daß auf alle Fälle sichergestellt ist, daß die Durchlässe 6 vom tiefsten Punkt der Schmelzkammer her in die darunter angeordnete Warmhaltekammer 8 führen.

Da anderseits die Innenfläche 25 des Deckels 14 höher liegt als der Boden 9 der Schmelzkammer 1, ist stets gewährleistet, daß auch in der Warmhaltekammer 2 oberhalb der Oberfläche 7 des geschmolzenen Metalls 8 stets ein nicht von geschmolzenem Metall eingenommener Raum 26 verbleibt. Dies ermöglicht es, daß die heißen Verbrennungsgase, die von der Flamme des Brenners 13 zum Schmelzen von Schmelzgut 10 in der Schmelzkammer 1 erzeugt werden, danach aus dem Ofen über die Durchlässe 6, den Raum 26, der sich in der Warmhaltekammer 2 zwischen Innenfläche 25 des Deckels 14 und der Oberfläche 7 des geschmolzenen Metalls 8 ausbildet, hin zum Kamin strömen und von dort austreten.

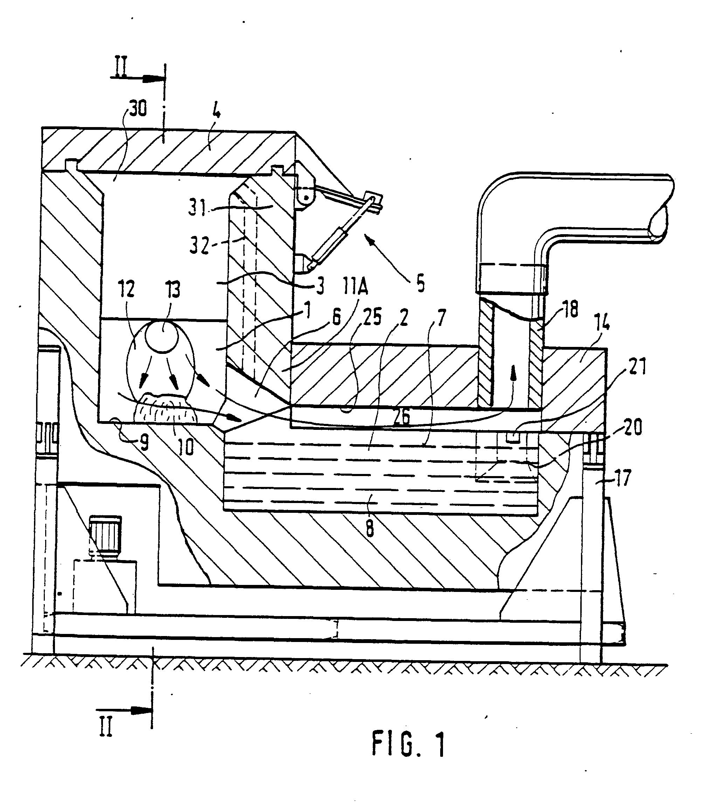

Nun ist in der aus Fig. 1 ersichtlichen Weise der Kamin 18 — von den Durchlässen 6 her gesehen — am entgegengesetzten Ende der Warmhaltekammer 2 angeordnet, so daß die austretenden heißen Gase bei ihrer Strömung zum Kamin 18 zwangsläufig über die Oberfläche 7 des geschmolzenen Metalls 8 geführt werden. Damit dienen sie der Warmhaltung des geschmolzenen Metalls 8 in der Warmhaltekammer 2, obwohl diese räumlich von der Schmelzkammer 1 getrennt ist. Gleichzeitig findet eine Nachverbrennung dieser Gase im Raum 26 statt, da die hohe Temperatur, die dort infolge der Wärmespeicherung durch das geschmolzene Metall 8 herrscht, während dieser Strömung dafür sorgt, daß in der Schmelzkammer 1 bzw. beim Austritt aus dem Brenner 13 noch nicht verbrannte brennbare Bestandteile in dem Gas oder im geschmolzenen Rücklaufschrott noch während der Strömung durch den Raum 26 verbrannt werden. Insofern ergibt der Schmelz- und Warmhalteofen eine Verbesserung der Energieausnutzung um 60 bis 70 Prozent im Vergleich zu seither verwendeten Schmelz- bzw. Warmhalteöfen, in denen die verbrannten Gase direkt aus der Schmelzkammer 1 in Kamine oder Abzugsrohre übergetreten sind.

Die Kanäle 32 und 33 dienen als Druckausgleichskanäle zwischen der Schmelzkammer 1 und der Warmhaltekammer 2 zum Abführen der Verbrennungsgase dann, wenn zeitweilig zuviel Schmelze durch die Durchlässe 6 fließen sollte.

Bei einer technischen Ausführung der Erfindung kann man z. B. von einer Schmelzleistung von 100 kg Aluminium/h und einer Warmhalteleistung von 500 kg Aluminium/h, bei einem Heizwert $H_u$ von 7 600 Kcal/$m^3$n ausgehen. Hierzu werden ca. 5 $m^3$ n/h Gas benötigt. Im Warmhaltebereich ergibt sich eine Temperatur von 700-800 °C, die regelbar ist.

Auf diese Weise entsteht in moderner und energiefreundlicher Leichtbauweise ein besonders einfach zu bedienender und energiemäßig besonders günstiger Schmlez- und Warmhalteofen. Es versteht sich von selbst, daß die Isolierung der Wände durch qualitativ hochwertige Leichtbauplatten erfolgt, wobei der Innenraum mit Feuerfest-Beton ausgekleidet ist. Flammenführung und Heißgasführung sind so ausgelegt, daß keine Rauchbildung bei Rücklaufmaterial-Abschmelzung erfolgen kann.

## Patentansprüche

1. Schmelz- und Warmhalteofen, insbesondere für NE-Metalle, mit einer Schmelzkammer (1) und einer Warmhaltekammer (2), die durch ein Wandteil (11A) voneinander getrennt sind, über mindestens einen Durchlaß (6) miteinander in Verbindung stehen und von denen die Warmhaltekammer (2) zur Aufnahme des aus der Schmelzkammer (1) nach dem Schmelzen abfließenden flüssigen Metalls über den mindestens einen Durchlaß (6) tiefer angeordnet ist als die Schmelzkammer (1), und mit einem in die Schmelzkammer (1) gerichteten Brenner (13), von dem die bei der Beheizung entstehenden Verbrennungsgase durch Öffnungen im Wandteil (11A) zu einem Abzug (18) geführt sind, dadurch gekennzeichnet, daß die Innenfläche (25) des Deckels (14) der Warmhaltekammer (2) in Höhe der unteren Oberkante des mindestens einen schrägen Durchlasses (6) zwischen der Schmelzkammer (1) und der Warmhaltekammter (2) liegt und daß am gegenüberliegenden Ende der Warmhaltekammer (2) in deren Deckel (14) der als Kamin (18) ausgebildete Abzug vorgesehen ist, wodurch die Verbrennungsgase unmittelbar über dem von der Schmelzkammer (1) in die Warmhaltekammer (2) abfließenden flüssigen Metall durch den mindestens einen schrägen Durchlaß (6) in die Warmhaltekammer (2) und von dort längs der Oberfläche des flüssigen Metallbades (8) zu dem Abzug geführt ist.

2. Schmelz- und Warmhalteofen nach Anspruch 1, dadurch gekennzeichnet, daß die Schmelzkammer (1) einen sich nach oben erstreckenden Schacht (3) aufweist, dessen Beschickungsöffnung (30) mit einem Deckel (4) verschließbar ist.

3. Schmelz- und Warmhalteofen nach Anspruch 1 oder 2, dadurch gekennzeichnet, daß in einer der Warmhaltekammer (2) zugewandten Wand (11A, 31) der Schmelzkammer (1) und/oder deren Schacht (3) Druckausgleichskanäle (32, 33) angeordnet sind, die eine Verbindung zwischen Schmelzkammer bzw. Schacht und Warmhaltekammer schaffen.

4. Schmelz- und Warmhalteofen nach Anspruch 1 oder einem der folgenden, dadurch gekennzeichnet, daß die gesamte Einheit, bestehend aus Schmelzkammer (1) mit Brenner (13) und Warmhaltekammer (2), sowie ferner einschließlich des Deckels (4) des Schachtes (3) der Schmelzkammer (1) mittels hydraulischer Einrichtungen (22, 23) derart kippbar ist, daß das in der Warmhaltekammer (2) befindliche geschmolzene Metall (8) über eine Auslaßöffnung (21) austritt.

## Claims

1. Melting and holding furnace, more particularly for non-ferrous metals, with a melting chamber (1) and a holding chamber (2) which are separated from one another by a wall part (11A), are connected to each other via at least one passage (6) and of which the holding chamber (2) for receiving the liquid metal which flows out of the melting chamber (1) after melting is disposed lower than the melting chamber (1) through the passage (6) of which there is at least one, and with a burner (13) which is directed into the melting chamber (1) and from which the exhaust gases which occur during heating are conducted through openings in the wall part (11A) to an outlet (18), characterised in that the inside surface (25) of the cover (14) of the holding chamber (2) is level with the lower top edge of the oblique passage (6), of which there is at least one, between the melting chamber (1) and the holding chamber (2) and in that the outlet which is designed as a chimney (18) is provided at the opposite end of the holding chamber (2) in the cover (14) of said chamber (2), through which the exhaust gases are conducted directly over the liquid metal flowing from the melting chamber (1) into the holding chamber (2) through the oblique passage (6), of which there is at least one, into the holding chamber (2) and from there along the surface of the liquid metal bath (8) to the outlet.

2. Melting and holding furnace as claimed in Claim 1, characterised in that the melting chamber (1) has a shaft (3) extending upwardly, the charging opening (30) of which can be closed with a cover (4).

3. Melting and holding furnace as claimed in Claim 1 or 2, characterised in that in a wall (11A, 31) of the melting chamber (1) and/or its shaft (3), facing towards the holding chamber (2), pressure compensating channels (32, 33) are disposed, said channels creating a connection between the melting chamber or shaft and the holding chamber.

4. Melting and holding furnace as claimed in Claim 1 or one of the following claims, characterised in that the whole unit, consisting of melting chamber (1) with burner (13) and holding chamber (2) and also including the cover (4) of the shaft (3) of the melting chamber (1) is able to be tilted by means of hydraulic devices (22, 23) such that the molten metal (8) located in the holding chamber (2) is discharged through an outlet opening (21).

## Revendications

1. Four de fusion et de maintien en température, en particulier pour métaux non précieux, comportant une chambre de fusion (1) et une chambre de maintien en température (2), qui sont séparées l'une de l'autre par une paroi (11A), et reliées entre elles par l'intermédiaire d'au moins un passage (6), la chambre de maintien en température (2) étant située plus bas que la chambre de fusion (1), pour recevoir le métal liquide s'écoulant de celle-ci après la fusion, à travers au moins un passage (6), et un brûleur (13), disposé de façon orientée dans la chambre de fusion (1), dont les gaz de combustion, se dégageant lors du chauffage, sont amenés vers une évacuation (18) à travers des orifices pratiqués dans la paroi (11A), caractérisé en ce que la face intérieure (25) du couvercle (14) de la chambre de maintien en température (2) est située à la hauteur du bord supérieur inférieur d'au moins un passage (6) reliant la chambre de fusion (1) et la chambre de maintien en température (2), et que sur l'extrémité opposée de la chambre de maintien en température (2), dans le couvercle (14) de celle-ci, il est prévue une évacuation conçue sous forme de cheminée (18), les gaz de combustion étant amenés directement, au-dessus du métal liquide s'écoulant de la chambre de fusion (1) dans la chambre de maintien en température (2), à travers au moins un passage (6) oblique, dans la chambre de maintien en température (2), et de là, le long de la surface du bain de métal liquide (8), à l'évacuation.

2. Four de fusion et de maintien en température, selon la revendication 1, caractérisé en ce que la chambre de fusion (1) comporte une cuve (3) s'étendant vers le haut, dont l'orifice de chargement (30) peut être fermé par un couvercle (4).

3. Four de fusion et de maintien en température, selon la revendication 1 ou 2, caractérisé en ce que dans une paroi (11A, 31), jouxtant la chambre de maintien en température (2), de la chambre de fusion (1) et/ou de sa cuve (3), sont disposés des conduits d'équilibrage de pression (32, 33), qui constituent une liaison entre la chambre de fusion ou la cuve et la chambre de maintien en température.

4. Four de fusion et de maintien en température, selon la revendication 1 ou l'une des suivantes, caractérisé en ce que l'ensemble constitué par la chambre de fusion (1) avec le brûleur (13) et la chambre de maintien en température (2), en y incluant en outre le couvercle (4) de la cuve (3) de la chambre de fusion (1), peut basculer par l'intermédiaire de dispositifs hydrauliques (22, 23) de telle façon, que le métal en fusion (8) se trouvant dans la chambre de maintien en température (2) s'écoule par un orifice de sortie (21).

FIG. 1

FIG. 2